Europäisches Patentamt

European Patent Office

Office européen des brevets

(19)

(11) Publication number: **0 240 357 B1**

## EUROPEAN PATENT SPECIFICATION

(12)

(45) Date of publication of patent specification: **22.07.92** (51) Int. Cl.⁵: **B60S 1/38**

(21) Application number: **87302916.9**

(22) Date of filing: **03.04.87**

(54) Pivot joint.

<table>
<tr>
<td>(30) Priority: <b>04.04.86 GB 8608280</b></td>
<td>(73) Proprietor: <b>TRICO FOLBERTH LIMITED<br>Great West Road<br>Brentford, Middlesex TW8 9HP(GB)</b></td>
</tr>
<tr>
<td>(43) Date of publication of application:<br><b>07.10.87 Bulletin 87/41</b></td>
<td></td>
</tr>
<tr>
<td></td>
<td>(72) Inventor: <b>Pethers, Peter Cecil<br>Villa Rosa Lovel Road<br>Winkfield Berkshire(GB)</b></td>
</tr>
<tr>
<td>(45) Publication of the grant of the patent:<br><b>22.07.92 Bulletin 92/30</b></td>
<td></td>
</tr>
<tr>
<td>(84) Designated Contracting States:<br><b>BE DE ES FR IT</b></td>
<td>(74) Representative: <b>Pedder, James Cuthbert<br>J.C. Pedder & Co. 38 Norbury Cross<br>Norbury London SW16 4JO(GB)</b></td>
</tr>
<tr>
<td>(56) References cited:<br><b>CH-A- 608 994<br>FR-A- 2 564 793<br>GB-A- 2 041 730<br>GB-A- 2 048 658</b></td>
<td></td>
</tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a pivot joint which is particularly but not exclusively useful in the manufacture of windscreen wipers.

In the manufacture of windscreen wipers, a number of pivot joints are used, particularly between the various yokes and/or levers of the windscreen wiper blade. A known pivot joint according to the preamble of claim 1 is shown in for example FR-A-2 564 793.

Problems exist in the manufacture of windscreen wipers due to the necessity, very often, of pivoting metal parts together. These joints tend to be noisy and have a tendency to suffer from wear and corrosion. Various proposals have been made for overcoming these problems, for example, by the provision of plastics members between the metal parts of the joints, but these have not proved altogether satisfactory from a manufacturing standpoint even though they have worked satisfactorily in use. One of the problems associated with prior proposals has been the necessity of retaining a rivet in the joint, making the formation of the joint labour intensive. Even where it has not been necessaary to use rivets or the like, post forming has sometimes had to be used with its attendant stress and corrosion problems in some circumstances.

The present invention seeks to provide a new and improved pivot joint which is relatively inexpensive to manufacture and assemble and which overcomes or reduces some or all of the above problems.

According to the invention, there is provided a pivot joint comprising a first member which is of channel section at least at one end, a second member which is pivotable to said one end of the first member, which is adapted to sit, at least partly, within the channel section of the first member and which is of channel section at least in the region of the joint and a joint body of substantially channel shaped cross section adapted to be inserted into an aperture in the base of the channel of the first member, the joint body having a base comprising a fixed surface engaging the edge of the aperture in the first member and having at least one resiliently movable side wall provided with an outwardly directed projection whereby a portion of the first member is held between the upper surface of the projection(s) and the fixed surface so as to retain the joint body in the first member and having a pair of detents, at least one of which is resilient, depending from the base of the channel and adapted to pass through one or more apertures in the base of the channel of the second member, which member lies, at least partially, within the channel of the joint body, the resilient detent(s) being springable between a first position in which the detents can pass through the aperture(s) in the second member and a second position in which they are prevented from passing therethrough so as to retaoin the second member within the joint body but in which there is play between the joint body and the second member in the insertion direction enabling the second member to pivot relative to the joint body, the joint body also comprising an edge, projecting from the base of the channel of the joint body, for pivotal engagement with the second member.

Both of the side walls of the channel of the first member may be provided with recesses which cooperate with projections on the outer surfaces of the side walls of the joint body, these side walls of the joint body being resiliently flexible towards and away from each other.

The recesses in the side walls of the first member may be formed by cut backs extending inwardly from the free longitudinal edges of the side walls so as to provide open sided recesses.

The first and second members may comprise yokes and/or levers of the harness of a windscreen wiper blade, and, more particularly, the first member may comprise the main yoke of a windscreen wiper blade harness and the second member may comprise a secondary yoke or lever.

The invention will now be described in greater detail, by way of example, with reference to the drawings, in which:-

Figure 1 is a perspective view from above of a joint body used in forming one embodiment of a pivot joint in accordance with the invention;

Figure 2 is a perspective view from below of the joint body of figure 1;

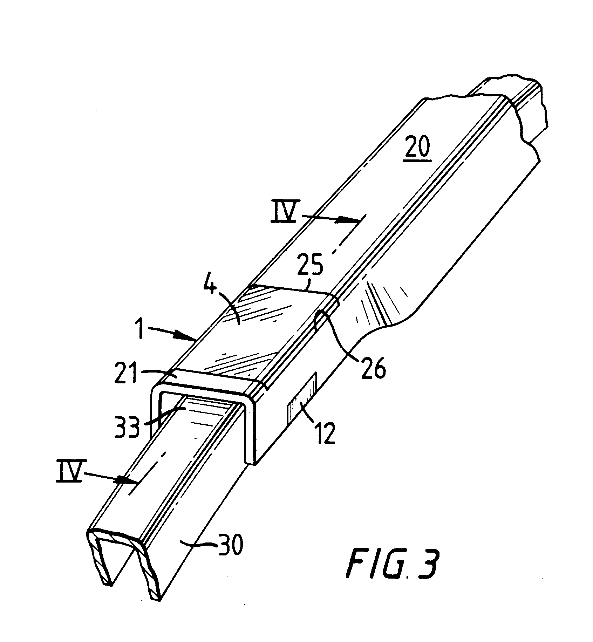

Figure 3 is a perspective view of a completed pivot joint using the joint body shown in figures 1 and 2;

Figure 4 is a sectional view of the pivot joint taken on the line IV-IV of figure 3, and

Figure 5 is a perspective exploded view of the pivot joint shown in figures 3 and 4.

The drawings show one form of pivot joint in accordance with the invention in which the joint is formed between the main yoke and a secondary yoke of a windscreen wiper blade.

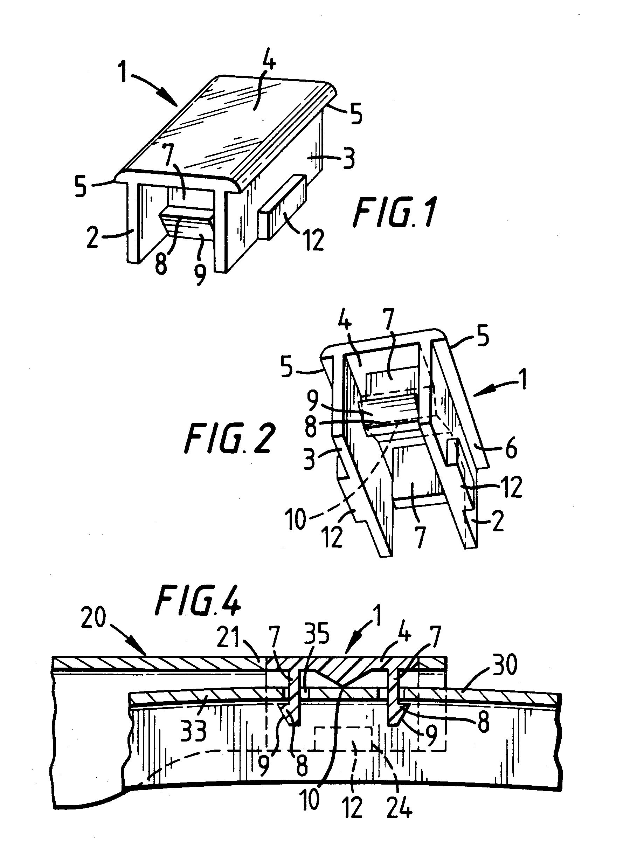

Referring firstly to figures 1 and 2, there is shown a joint body 1 for use in forming this pivot joint, which body 1 is generally of channel section having two side walls 2 and 3 and a base portion 4. The base portion 4 is extended beyond the side walls 2 and 3 so as to provide narrow flanges 5 down each side of the body 1 with operative fixed surfaces 6. The base portion 4 is also provided with a pair of upstanding resilient detent members 7 with detents 8 thereon which face away from each other. The detents 8 have inclined surfaces 9 which extend to the end of the detent members 7 and face outwardly. Between the detent members 7 is a ridge portion 10 extending transversely of and at right angles to the longitudinal direction of the channel and forming a "knife edge" for a purpose to be hereafter described.

The inner faces of the side walls 2 and 3 are smooth and the outer faces are provided, at their free edges with rectangular projections 12 having upwardly directed surfaces 14. The joint body is formed of a plastics material such that the side walls 2 and 3 and the detent members 7 can be resiliently flexed towards and away from each other for assembly purposes.

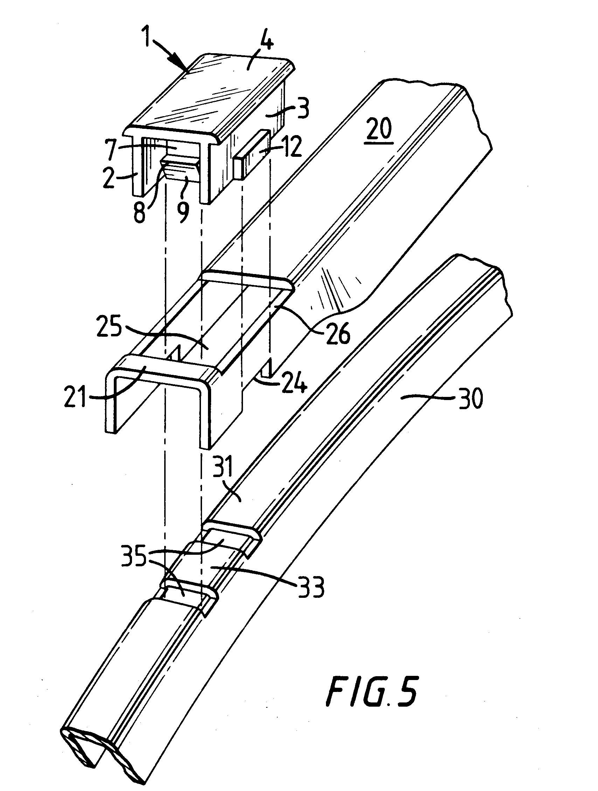

As can be particularly seen from figure 5, the end 21 of the main yoke 20 and a mid portion 31 of the secondary yoke 30 are specially formed to cooperate with the joint body 1. To this end, the end of the main yoke, which is generally of channel section, has its side walls 22 brought together so as to extend parallel to each other. The height of the side walls 22 is reduced at this point and the side walls 22 are provided with cut outs 24 of rectangular shape to provide open sided recesses which are complementary to the projections 12. An aperture 25 is formed in the base of channel of dimensions to receive the side walls 2 and 3 of the joint body 1, the inner edges of the side walls of the yoke 20 being cut back at 26 so as to seat the flanges 5 of the joint body 1, with the outer surface of the base 4 of the channel portion of the joint body 1 flush with the outer surface of the main yoke 20.

The mid portion 31 of the secondary yoke, which is also of channel section, is maintained with its existing shape and is provided in the base part 33 of its channel with two apertures 35 spaced by approximately the same distance as the detent members 7 of the joint body 1 so as to be able to receive these detent members on assembly.

The assembly of the pivot joint will now be described:-

The side walls 2 and 3 of the joint body 1 are flexed towards each other and the joint body 1 is then pushed into the main yoke 20 through its aperture 25 until the flanges 5 of the joint body sit on the cut back portions 26 of the side walls of the main yoke 20. At this point, the cut outs 24 will be aligned with the projections 12 which can snap outwards and seat therein under the resilience of the side walls 2 and 3 of the joint body 1. In this way, the joint body 1 is secured against movement in the main yoke 20 by containing a part of the side wall of the yoke 20 between its surfaces 6 and 14.

The secondary yoke 30 is then offered up so that the appertures 35 therein are aligned with the detent members 7 of the joint body 1. Because the detents 8 are provided with inclined outer surfaces 9, the secondary yoke 30 can be merely pushed up into the joint body 1, whereupon the detents 8 will be pushed towards each other during insertion to allow them to pass through the apertures. Once the detents have passed through the apertures 35, they will spring outwardly to secure the joint body 1 and secondary yoke 30 from separating. The "knife edge" 10 will be able to engage the surface of the secondary yoke 30 between the apertures 35 to provide a fulcrum. This will take place, even though there is some play between the secondary yoke 30 and the joint body 1, by virtue of the pressure exerted between the arm (not shown) carrying the blade and the blade rubber (which is also not shown).

While it will be appreciated that, with the embodiment described, there is no necessity for the joint to be dissassembled once it has been formed, nevertheless, there may well be applications in which such dissassembly might be desirable. However, it will be appreciated that the presently described joint provides for such dissassembly as follows:-

The two detents 8 in the joint body are either pushed together, or one of the detent members 7 is pushed up against the edge of its aperture 35 so that it is flexed towards the other detent member by manipulating the two yokes 20 and 30. It is held in this position and the other detent member is pushed towards it. This allows the said other detent to be withdrawn by manipulation of the two yokes. Once one detent member has been withdrawn, it is a relatively easy matter to withdraw the other detent member.

The two yokes 30 and 30 are now separated and all that remains to be done is to withdraw the joint body 1 from the main yoke 20. This is achieved by squeezing together the two sides 2 and 3 of the joint body, withdrawing the projections 12 from the cut outs 24. The joint body 1 can then be pushed out of the aperture 25 in the main yoke 20.

It will be appreciated that various modifications may be made to the above described embodiment without departing from the scope of the invention. For example, the two apertures 35 in the secondary yoke 30 may be replaced by a single larger aperture. In this case, the "knife edge" 10 could be extended across the whole width of the channel in the joint body 1 so that it acted on the edges of the new larger aperture. Alternatively, the "knife edge" 10 could be omitted entirely, the play between the joint body 1 and the secondary yoke 30 being relied upon for providing pivoting.

While the secondary yoke has been described as having a channel section, this need not necessarily be so provided that it is of a form in which suitable aperture(s) 35 can be produced.

Only one of the two detent members 8 need be resilient provided that the resilient detent has sufficient resilience to allow proper aligning of the detents 8 with the aperture(s) 35 for assembly purposes. Although the cut backs 26 at the edge of the aperture 25 are desirable, not least for aesthetic reasons, it will be understood that these may be omitted leaving the base portion 4 of the joint body 1 standing proud of the surface of the main yoke 20.

A plastics end cap may be provided to cover the metal end of the main yoke. The aperture 25 in the main yoke may be open ended i.e. may extend to the end of the yoke.

It will also be appreciated that, while the invention has been described with reference to a pivot joint between the main yoke and a secondary yoke of a windscreen wiper blade, the invention is equally applicable to any joints between yokes and levers. It is not to be considered that the invention is limited to the windscreen wiper art. It is also applicable to other arts where pivot joints with similar characteristics are required.

## Claims

1. A pivot joint comprising a first member (20) which is of channel section at least at one end, a second member (30) which is pivotable to said one end of the first member (20), which is adapted to sit, at least partly, within the channel section of the first member (20) and which is of channel section at least in the region of the joint and a joint body (1) of substantially channel shaped cross section characterised in that the joint body (1) is adapted to be inserted into an aperture (25) in the base of the channel of the first member (20), the joint body (1) having a base (4) comprising a fixed surface (6) engaging the edge of the aperture (25) in the first member (20) and having at least one resiliently movable side wall (2, 3) provided with an outwardly directed projection (12) whereby a portion of the first member (20) is held between the upper surface of the projection(s) (12) and the fixed surface (6) so as to retain the joint body (1) in the first member (20) and having a pair of detents (8), at least one of which is resilient, depending from the base (4) of the channel and adapted to pass through one or more apertures (35) in the base of the channel of the second member (30), which member (30) lies, at least partially, within the channel of the joint body (1), the resilient detent(s) (8) being springable between a first position in which the detents (8) can pass through the aperture(s) (35) in the second member (30) and a second position in which they are prevented from passing therethrough so as to retain the second member (30) within the joint body but in which there is play between the joint body (1) and the second member (30) in the insertion direction enabling the second member (30) to pivot relative to the joint body (1), the joint body also comprising an edge (10), projecting from the base (4) of the channel of the joint body (1), for pivotal engagement with the second member (30).

2. A pivot joint as claimed in claim 1, characterised in that both of the side walls of the channel of the first member (20) are provided with recesses (24) which cooperate with projections (12) on the outer surfaces of the side walls (2, 3) of the joint body (1), these side walls (2, 3) of the joint body (1) being resiliently flexible towards and away from each other.

3. A pivot Joint as claimed in claim 2, characterised in that the recesses (24) in the side walls of the first member (20) are formed by cut backs extending inwardly from the free longitudinal edges of the side walls so as to provide open sided recesses.

4. A pivot joint as claimed in any one of claims 1 to 3, characterised in that the first and second members (20, 30) comprise yokes and/or levers of the harness of a windscreen wiper blade.

5. A pivot joint as claimed in claim 5, characterised in that the first member (20) comprises the main yoke of a windscreen wiper blade harness and the second member (30) comprises a secondary yoke or lever.

## Revendications

1. Un joint de pivotement comprenant un premier élément (20) dont la section transversale est en canal au moins à une première extrémité, un deuxième élément (30), pouvant pivoter sur ladite première extrémité du premier élément (20), qui est apte à reposer, au moins partiellement, à l'intérieur de la section transversale de canal du premier élément (20) et dont la section transversale est en canal au moins dans la zone du joint et un corps (1) de joint de section transversale sensiblement en forme de canal caractérisé en ce que le corps (1) de joint est apte à être inséré dans une ouverture (25) dans la base du canal du premier élément (20), le corps (1) de joint comportant une base (4) comprenant une surface fixe (6) engageant le bord de l'ouverture (25) du premier élément (20) et comportant au moins une paroi latérale (2, 3) mobile de façon élastique pourvue d'une saillie (12) dirigée vers l'extérieur grâce à quoi une partie du premier élément (20) est maintenue entre la surface supérieure de la saillie ou des saillies (12) et la surface fixe (6) de façon à retenir le corps (1) de joint dans le premier élément (20) et comportant une paire de positionneurs (8), dont au moins l'un est élastique, suspendus à la base (4) du canal et aptes à traverser une ou plusieurs ouvertures (35) dans la base du canal du deuxième élément (30), cet élément (30) reposant, au moins partiellement, à l'intérieur du canal du corps (1) de joint, le ou les positionneur(s) élastique(s) (8) pouvant sauter entre une première position dans laquelle les positionneurs (8) peuvent traverser la ou les ouvertures (35) du deuxième élément (30) et une deuxième position dans laquelle ils ne peuvent le ou les traverser de façon à retenir le deuxième élément (30) à l'intérieur du corps de joint mais dans laquelle il existe, entre le corps (1) de joint et le deuxième élément (30), un jeu dans la direction d'insertion qui permet au deuxième élément (30) de pivoter par rapport au corps (1) de joint, le corps de joint comprenant aussi un bord (10), en saillie à partir de la base (4) du canal du corps (1) de joint, en vu d'un engagement à pivotement avec le deuxième élément (30).

2. Un joint de pivotement selon la revendication 1, caractérisé en ce que les deux parois latérales du canal du premier élément (20) comportent des évidements (24) qui coopèrent avec des saillies (12) des surfaces extérieures des parois latérales (2, 3) du corps (1) de joint, ces parois latérales (2, 3) du corps (1) de joint étant flexibles de façon élastique pour se rapprocher ou s'écarter l'une de l'autre.

3. Un joint de pivotement selon la revendication 2, caractérisé en ce que les évidements (24) des parois latérales du premier élément (20) sont constitués par des coupes en arrière s'étendant vers l'intérieur à partir des bords longitudinaux libres des parois latérales de façon à constituer des évidements à côtés ouverts.

4. Un joint de pivotement selon l'une quelconque des revendications 1 à 3, caractérisé en ce que le premier et le deuxième éléments (20, 30) forment des étriers et/ou des leviers du système d'entraînement d'une lame d'essuie-glace de pare-brise.

5. Un joint de pivotement selon la revendication 5, caractérisé en ce que le premier élément (20) forme l'étrier principal d'un dispositif d'entraînement de lame d'essuie-glace de pare-brise et le deuxième élément (30) forme un étrier ou levier secondaire.

**Patentansprüche**

1. Zapfengelenk, das ein erstes Teil (20), das an zumindest einem Ende einen kanalförmigen Querschnitt aufweist, ein zweites Teil (30), das zu einem Ende des ersten Teils (20) schwenkbar ist, das so angepaßt ist, daß es zumindest teilweise im kanalförmigen Querschnitt des ersten Teils (20) sitzt und zumindest im Bereich der Verbindung einen kanalförmigen Querschnitt aufweist, und einen Verbindungskörper (1) umfaßt, der im wesentlichen einen kanalförmigen Querschnitt aufweist, dadurch gekennzeichnet, daß der Verbindungskörper (1) in die Öffnung (25) im Grundteil des Kanals des ersten Teils (20) eingesetzt werden kann, wobei der Verbindungskörper (1) ein Grundteil (4), das eine feste Oberfläche (6) umfaßt, die in die Kante der Öffnung (25) im ersten Teil (20) eingreift und zumindest eine elastisch bewegliche Seitenwand (2, 3) aufweist, die mit einem nach außen gerichteten Vorsprung (12) versehen ist, wodurch ein Abschnitt des ersten Teils (20) zwischen der oberen Oberfläche des Vorsprungs (der Vorsprünge) (12) und der festen Oberfläche (6) gehalten wird, so daß der Verbindungskörper (1) im ersten Teil (20) gehalten wird, und ein paar einrastbarer Arretierungen (8) aufweist, von denen zumindest eine elastisch ist, die vom Grundteil (4) des Kanals abgehen und durch eine oder mehrere Öffnungen (35) im Grundteil des Kanals des zweiten Teils (30) hindurchgehen können, wobei dieses Teil (30) zumindest teilweise im Kanal des Verbindungskörpers (1) liegt, wobei die elastische(n) einrastbare(n) Arretierung(en) (8) zwischen einer ersten Position, in der die einrastbaren Arretierungen (8) durch die Öffnung(en) (35) im zweiten Teil (30) hindurchgehen können, und einer zweiten Position federn kann, in der sie am Hindurchgehen gehindert werden, so daß das zweite Teil (30) im Verbindungskörper gehalten wird, jedoch darin ein Spielraum zwischen dem Verbindungskörper (1) und dem zweiten Teil (30) in der Richtung des Einsetzens verbleibt, so daß sich das zweite Teil (30) im Verhältnis zum Verbindungskörper (1) drehen kann, wobei der Verbindungskörper auch eine Kante (10), die vom Grundteil (4) des Kanals des Verbindungskörpers (1) vorsteht, zum drehbaren Eingriff in das zweite Teil (30) umfaßt.

2. Zapfengelenk nach Anspruch 1, dadurch gekennzeichnet, daß beide Seitenwände des Kanals des ersten Teils (20) mit Vertiefungen (24) versehen sind, die mit Vorsprüngen (12) auf den Außenoberflächen der Seitenwände (2, 3) des Verbindungskörpers (1) in Wechselwirkung stehen, wobei diese Seitenwände (2, 3) des Verbindungskörpers (1) in Richtung zueinander und voneinander weg elastisch flexibel sind.

3. Zapfengelenk nach Anspruch 2, dadurch gekennzeichnet, daß die Vertiefungen (24) in den Seitenwänden des ersten Teils (20) durch Herausschneiden der Rückseiten gebildet werden, die sich von den freien Längskanten der Seitenwände nach innen erstrecken, um Vertiefungen mit offener Seite zu schaffen.

4. Zapfengelenk nach einem der Ansprüche 1 - 3, dadurch gekennzeichnet, daß das erste und zweite Teil (20, 30) Arme und/oder Hebel des Bügels des Scheibenwischerblattes umfassen.

5. Zapfengelenk nach Anspruch 5, dadurch gekennzeichnet, daß das erste Teil (20) den Hauptarm des Scheibenwischerblattbügels und das zweite Teil (30) den sekundären Arm oder Hebel umfaßt.

*FIG.1*

*FIG.2*

*FIG.4*

FIG. 3

FIG.5